# EUROPEAN PATENT APPLICATION

(11) **EP 0 775 597 A2**
(43) Date of publication of application: **28.05.1997**
(21) Application number: 96308499.1
(22) Date of filing: 25.11.1996
(51) Int. Cl.: B44C 1/14, B44F 9/02, A47G 1/06

(54) **Method of ornamenting plastic articles**

(30) Priority: 25.11.1995 GB 9524159
(71) Applicant: Robobond Limited, London (GB)
(72) Inventor: Detenon, Robert, Romford, Essex RM2 6NJ (GB)
(74) Representative: Jones, William

(57) **Abstract**

This application describes a method and a suitable apparatus for ornamenting a plastics article. The method comprises applying a thin metallic foil to the surface of the plastics article to bond thereto and subsequently subjecting the foil-coated article to microwave radiation. The apparatus is a travelling microwave oven with chokes at the inlet and outlet to prevent microwave leakage.

## Description

### Field of the Invention

The present invention relates to a method and suitable apparatus for ornamenting plastics articles and most especially, but not necessarily exclusively, lengths of extruded plastics materials such as lengths of extruded polystyrene as used in the plastics picture frame-manufacturing industry.

### Background to the Invention

In the extruded plastics picture frame manufacturing industry there is a continuing demand for evermore creative techniques for ornamenting the plastics extrusions that form the framing components of picture frames. The current applicants UK patent application number GB2 276 318 describes one particular new technique for ornamenting the surface of the frame members to give a sculpted appearance. Techniques such as this give greater flexibility in the design of the plastics frame members to create products that are uniquely attractive or closely resemble the natural wooden picture frames that are far costlier to produce.

In terms of surface finish, rather than spraying the articles with paint or lacquer it is quite a common practice in the industry to apply metallic foils to the surface of the lengths of extruded plastics. The foils used are generally known as "hot stamp foils" having a very thin layer of vacuum metallised-vapourised aluminium or other metal, (being of the order of approximately 0.02 microns depth of aluminium) coated with sizing to a depth of approximately 1.5 microns and underlayed with printed lacquer to a depth of about 1 micron and a release coating to a depth of about 0.01 microns. Prior to being transferred to the lengths of extruded plastic, the hot stamp foil further comprises a carrier layer of polyester film of the order of 12 to 25 microns in depth. The layer of aluminium gives rise to a metallic sheen to the product. Conventionally hot stamp foil application constitutes "the finishing touch" to the products and leaves them with their original smooth surface finish. This texture undermines any attempt to make the overall frame appear to be made of a natural material.

It is a general objective of the present invention to provide a technique for ornamenting extruded plastics picture frame members that is simple, economical and yet produces an interesting and attractive new appearance of plastics product that is not readily achievable by other means. It is a further general objective of the present invention to provide such a technique which alters the texture of the product surface to give it a new appearance and preferably to give it the appearance of a natural material product.

### Summary of the Invention

According to the present invention there is provided a method for ornamenting a plastics article which comprises applying a thin metallic film to a surface of the plastics article to bond thereto and subsequently subjecting the article to microwave radiation.

The article is suitably an extruded plastics article and most suitably a picture frame member. The method of the present invention may, however, have applicability in manufacture of other types of plastics article where it is desired to provide a textured surface to the product.

The metallic film is most suitably deposited in a vacuum-metallisation process and is preferably of the "hot stamp foil" type.

One particularly preferred metallic film comprises aluminium.

Preferably in the method between 0.1 kilojoules and 5.0 kilojoules of energy are applied to the foil-coated article.

In some trials it has been determined that the results obtained from the method of the invention are influenced by not only the level of microwave energy input but also the shape of the article and character of the metallic foil, preferably the method further comprises the step of selecting the level of microwave energy to be applied dependent upon the shape of the article and character of the foil. To this end, it is desirable to have a means of applying microwave energy adapted for variable controls of the level of microwave energy generated.

For the purposes of the invention the appliance for applying the microwave energy is suitably a microwave oven that has a mode stirrer to thereby ensure that the microwaves are distributed relatively evenly throughout the microwave chamber.

For optimum efficiency of the invention as part of the method there is preferably provided a travelling microwave oven having an inlet port and an outlet port whereby articles to be subjected to microwave radiation may be continuously delivered through he oven, the inlet and outlet ports each having choke means to absorb or reflect back into the oven microwave radiation that reaches the respective ports. According to a further aspect of the present invention there is suitably provided a microwave oven having the characteristics mentioned above.

Preferably the choke means each comprise a double walled tubular casing extending substantially longitudinally of the direction of travel of the microwave oven from the respective port and through which each article being processed passes, in use, the tubular casing having a duct between its inner and outer walls through which water flows, in use, to absorb microwaves.

In this context, it is desirable to provide a chilling unit to cool the water flowing from the choke means and such chilling unit may also be used to cool the magnetron of the microwave oven.

For the purposes of the method of the present invention the microwave oven is suitably at least 0.5 metres in length and up to two metres in length and is capable of supplying 5 kilowatts of microwave power.

### Brief Description of the Drawings

A preferred embodiment of the present invention will now be more particularly described, by way of example, with reference to the accompanying drawings, wherein:
Figure 1 is a perspective view of a short length of an extruded polystyrene picture frame member overlaid with a hot stamp metal foil;
Figure 2 is a view similar to that of Figure 1 and showing the effect of microwave treatment, the extruded plastic lengths being of a golden coloured polystyrene;
Figure 3 is a view similar to that of Figure 1 and subsequent to microwave treatment but of a frame member of black coloured polystyrene;
Figure 4 is a schematic diagram illustrating a first travelling microwave oven arrangement; and
Figures 5 and 6 are longitudinal sectional views of two further travelling microwave oven arrangements.

### Description of the Preferred Embodiment

In trials that have been carried out to date, a 20 centimetre length of 4.5 centimetre by 1.5 centimetre cross section gold coloured extruded polystyrene was overlaid with an aluminium hot stamp metal foil as frequently used in the extruded plastics picture frame industry and as specified hereinbefore.

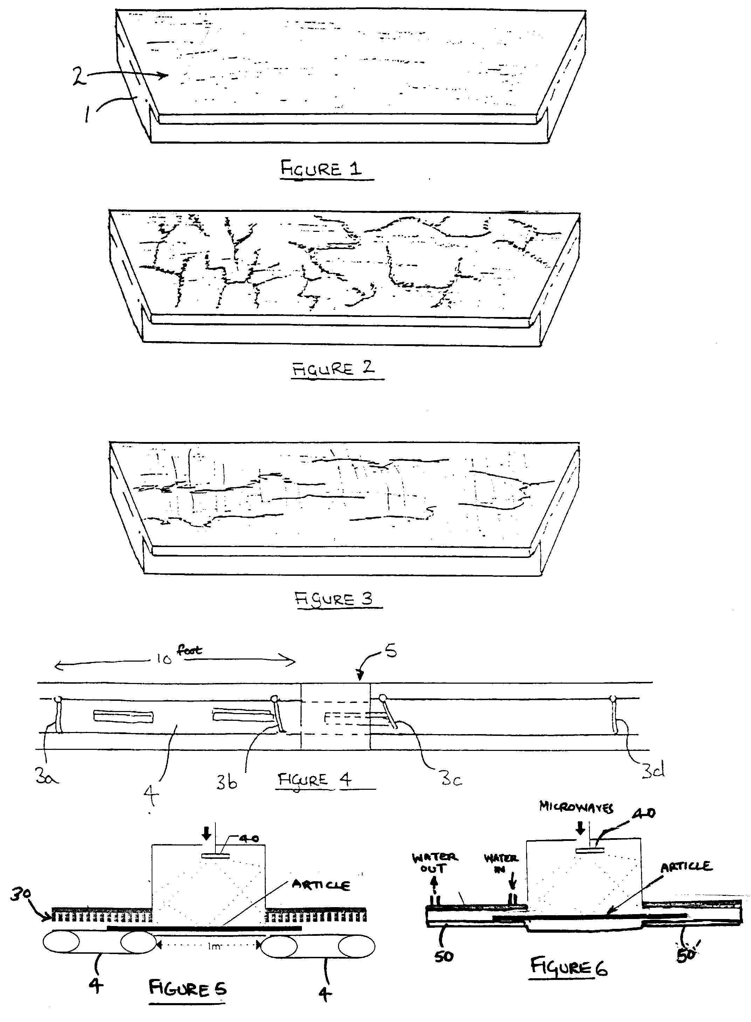

Such a foil-laminated length of extruded polystyrene is illustrated in Figure 1, in which the length of extrusion 1 is coated on the top surface with the foil 2.

Upon subjecting the length of polystyrene 1 to an exposure of two seconds with 600 watts of microwave radiation in a conventional microwave oven arcing was observed to occur in localised areas across the top surface of the foil-coated article and upon its withdrawal from the oven it was observed that the surface of the article had become crazed, as illustrated in Figure 2. This crazing comprises a plurality of shallow hairline cracks in the surface of the extrusion 1. In this particular case it is postulated that the cracking arises from intense localisation of the microwave energy in those specific zones and through which the energy initially penetrates the metal foil layer.

The duration of exposure to microwave energy and the level of that energy was insufficient to cause any structural damage to the article 1 beyond the alteration of the surface texture.

The process was again repeated with a length of black coloured extruded polystyrene laminated with the same foil and for an identical period and level of exposure to microwave radiation in the oven and the result is as illustrated in Figure 3. It will be noted that the patterning of the cracks is substantially different, creating a different visual and textural effect. In this case, it is thought that the underlying black polystyrene may absorb the energy more readily or rapidly. As can be seen from Figure 3 a particular characteristic of the patterning resulting from irradiation of the black extruded polystyrene is the absence of branching of the longitudinal cracks and the appearance of very fine transverse hairline cracks. In the Figure embodiment the appearance is reminiscent of weathered plaster such as, for example, the frescos seen in Roman villas. In the case of the Figure 3 embodiment the effect is more reminiscent of aged wood.

In both cases, to the independent observer the products appear less synthetic and far more natural in origin and as if rendered antique.

From further trials that are now underway it has been determined that further differing effects may be achieved through use of different metals and different compositions of foil in addition to the demonstrated influence of colour of the plastics extrusion on the end result. The most dramatically stressed results appear to arise from the more uniformly metallised foils. The effect also varies dependent upon the cross-sectional profile of the extruded plastics lengths being treated. Simpler profiles and flatter top surfaces are the most effective for the treatment and generally require the least input of microwave energy. Generally increasing inputs of energy exaggerate the stressing effect.

Referring to Figures 4 and 5 for mass production purposes, the travelling microwave oven may be designed having a tunnel-shaped body having an inlet port 10 and outlet port 20 through which the extruded plastics members may travel on a conveyor, provided that the microwave oven is suitably shielded to prevent escape of the microwaves into the surrounding environment. Figure 4 illustrates schematically a configuration of a travelling microwave oven having choke means comprising swinging microwave shielding barrier gates 3a-3d across the conveyor line 4 at both the inlet and the outlet of the microwave oven 5.

These barrier gates may be formed of reflective brushes to minimise gaps through which microwaves may escape as the product passes therethrough and to reflect the microwave energy back in toward the microwave "oven" 5. As shown in Figure 5, however, the choke means may comprise a plurality of plane parallel baffle plates, or fins, 30 transverse to the direction of travel of the oven to absorb the microwave energy and cooled by water flowing around or through the plates 30 through a cooling circuit. Figure 6 illustrates a yet further configuration of choke means which comprises a double-walled tubular casing 50, 50' extending from each respective port and between the inner and outer walls of which water flows to absorb the microwave radiation escaping the confines of the microwave oven.

The casing 50, 50' suitably extends for a length of a metre or so from the outlet port to provide a good safety margin for absorption of microwave radiation and the water that flows through the duct formed between the inner and outer walls of the casing 50, 50' is suitably delivered through a chilling unit (not shown) to cool the water before it is re-circulated to the choke means. The chiller unit may also serve the dual role of cooling the magnetron which has to operate at high power output levels.

For additional security, the casing 50, 50' is suitably enshrouded in a rubber lining cover. Furthermore, microwave sensors are suitably provided proximate the end of the inlet/outlet port and/or end of the casing, 50, 50'. Such sensors are suitably linked to the control of the microwave oven to switch it off if any leak is detected.

As a further improvement to the microwave "oven" 5 it is conceivable that there may be merit in providing a linear directional control of the microwave energy to enable control of the patterning process. However, to enablc the microwave oven 5 to handle articles of differing cross-sectional profile it is most useful to have an oven with a mode stirrer 40 to distribute the microwaves more evenly throughout the chamber of the microwave oven 5 and compensate for the cross-sectional profile differences to ensure effectiveness and consistency of the patterning/ornamenting process.

For the operation of the travelling microwave oven 5 it suitably has a generator power output of around 5 kw and at a high frequency of about 2.5 Gh_{Z}. A computer control operating panel is suitably provided for adjustment of power output and to control the rate of the conveyor 4 to suit the article being treated and the effect sought.

Where conventional style microwave ovens are to be used, the duration of the exposure is still sufficiently short that substantially high volumes of articles may nonetheless be processed in a relatively short period of time and with relatively cheap input of energy. Indeed, the simplicity of the technique and its low cost make it an extremely affordable alternative means for ornamenting extruded plastics frame members in contrast to conventional techniques.

## Claims

1. A method for ornamenting a plastics article which comprises applying a thin metallic foil to the surface of the plastics article to bond thereto and subsequently subjecting the foil-coated article to microwave radiation.

2. A method as claimed in Claim 1, wherein between 0.1 kilojoules and 5 kilojoules of energy are applied to the foil-coated article.

3. A method as claimed in Claim 2, wherein the level of microwave energy input applied to the article is selected dependent upon the shape of the article and the character of the metallic foil.

4. A method as claimed in Claim 3, wherein the microwave radiation is applied by placing the article within a microwave oven having a mode stirrer.

5. A method as claimed in any preceding claim, wherein the article is subjected to microwave radiation within a travelling microwave oven having an inlet port and an outlet port whereby articles to be subjected to microwave radiation may be continuously delivered through the oven, the inlet and outlet ports each having choke means to absorb or reflect back into the oven microwave radiation that reaches the respective ports.

6. A microwave oven characterised in that it is a travelling oven having an inlet port and outlet port to enable items to be treated by the microwave oven to be continuously passed through the microwave oven during operation of the microwave oven, the inlet and outlet ports each having choke means to absorb or reflect back into the oven microwave radiation that reaches the respective port.

7. A microwave oven as claimed in Claim 6, wherein a respective conveyor means is provided adjacent each of the inlet port and outlet port for delivery of the item to be treated into the oven and removal of the item emerging therefrom.

8. A microwave oven as claimed in Claim 6 or Claim 7 wherein each choke means is adapted to absorb microwaves and comprises a double-walled tubular casing extending substantially longitudinally of the direction of travel of the microwave oven from the respective port and through which each article being processed passes, in use, the tubular casing forming a duct between its inner and outer walls through which water flows, in use, to absorb microwaves.

9. A microwave oven as claimed in Claim 8, wherein a chilling unit is provided to cool the water from the choke means, in use. and wherein the cooled water is recirculated to the choke means.

10. A microwave oven as claimed in any of claims 6 to 9, wherein the microwave oven has an operative length of 0.5 metres and up to 2 metres and is able to supply 5 kw of microwave power.

11. A plastics article ornamented by the method of any preceding claims.
